# EUROPEAN PATENT APPLICATION

(11) **EP 4 383 560 A1**
(43) Date of publication of application: **12.06.2024**
(21) Application number: 22851672.0
(22) Date of filing: 25.05.2022
(51) Int. Cl.: H02S 50/00

(54) **PHOTOVOLTAIC SYSTEM, IV SCANNING METHOD AND APPARATUS THEREFOR, AND COMBINER BOX**

(30) Priority: 04.08.2021 CN 202110890554
(71) Applicant: Sungrow Power Supply Co., Ltd., Hefei, Anhui 230088 (CN)
(72) Inventor: FAN, Chunjiang, Hefei, Anhui 230088 (CN); QIAN, Yongheng, Hefei, Anhui 230088 (CN); DING, Jie, Hefei, Anhui 230088 (CN)
(74) Representative: Epping - Hermann - Fischer
(86) International application number: PCT/CN2022/094853
(87) International publication number: WO 2023/010955

(57) **Abstract**

Disclosed in the present application are a photovoltaic system, an IV scanning method and apparatus therefor, and a combiner box. The scanning method comprises: a combiner box acquiring string open-circuit voltages of photovoltaic strings, and sending the string open-circuit voltages to a preset controller; an inverter determining an initial scanning voltage according to the string open-circuit voltages, and controlling, on the basis of a first preset step, string output voltage values to gradually change from the initial scanning voltage to a preset voltage lower limit value; the combiner box acquiring, at each string output voltage value, the value of an output current which flows through the photovoltaic strings, and sending the string output voltage value and the value of the output current to the preset controller; and the preset controller determining a scanning sample point set of each photovoltaic string according to the string open-circuit voltage, the string output voltage value and the value of the output current. By means of the embodiments of the present invention, an IV scanning function of a single photovoltaic string is realized by means of a string open-circuit voltage and an output current value of the photovoltaic string, thereby facilitating an improvement in the scanning precision and an improvement in the performance prediction accuracy of a photovoltaic cell panel.

## Description

The present application claims priority to Chinese Patent Application No. 202110890554.3, titled "PHOTOVOLTAIC SYSTEM, I-V CURVE SCANNING METHOD AND DEVICE, AND COMBINER BOX", filed on August 4, 2021 with the China National Intellectual Property Administration, which is incorporated herein by reference in its entirety.

### FIELD

The present disclosure relates to the technical field of photovoltaics, and in particular to a photovoltaic system, an I-V curve scanning method and an I-V curve scanning device for the photovoltaic system, and a combiner box.

### BACKGROUND

A photovoltaic array is a core component of a photovoltaic system and operates outdoors for a long time. The age and surroundings of the photovoltaic array affect the performance of the photovoltaic array. Evaluating power generation capacity of a photovoltaic module and detecting a malfunction of the photovoltaic module are of great significance to increase the power production of the photovoltaic system.

At present, the photovoltaic module is generally tested with I-V curve scanning, in which an inverter or I-V scanning device samples an output voltage and an output current of a photovoltaic cell, acquires data such as exposure to sunlight and temperature of the photovoltaic array based on the sampling result, and subsequently determines whether the photovoltaic cell is operating improperly, for example, whether the photovoltaic cell is shaded, whether the photovoltaic cell is damaged, or whether there is a hot spot on the photovoltaic cell, and even acquire attenuation of the photovoltaic cell.

However, the conventional I-V curve scanning is applicable to string inverters only. Failure to monitor all photovoltaic strings in a centralized photovoltaic system results in inaccurate I-V curve scanning result, affecting performance evaluation of the photovoltaic array.

### SUMMARY

A photovoltaic system, an I-V curve scanning method and an I-V curve scanning device for the photovoltaic system, and a combiner box are provided according to the present disclosure. The I-V curve scanning can be performed for a single photovoltaic string in a centralized grid-connected system. Further, the I-V characteristic curve is optimized.

In a first aspect, an I-V curve scanning method for a photovoltaic system is provided according to an embodiment of the present disclosure. The photovoltaic system includes an inverter and a combiner box. The combiner box is connected to a direct-current side of the inverter. The combiner box is connected to m photovoltaic strings, m is a positive integer greater than 1. The method includes: acquiring an open-circuit voltage of the photovoltaic string and sending the open-circuit voltage to a preset controller, by the combiner box; determining an initial scanning voltage based on the open-circuit voltage and regulating an output voltage of the photovoltaic string to change from the initial scanning voltage to a preset minimum voltage at a first preset step size, by the inverter; acquiring output currents of the photovoltaic string corresponding to the output voltages and sending the output voltages and the output currents to the preset controller, by the combiner box; and determining a sample set of the photovoltaic string based on the open-circuit voltage, the output voltages and the output currents of the photovoltaic string, by the preset controller.

In an embodiment, the acquiring the open-circuit voltage of the photovoltaic string includes: stepping up a direct-current bus voltage by the inverter, where the current flows from the inverter to the photovoltaic string in a first direction; stepping down the direct-current bus voltage by the inverter, until the current flows from the photovoltaic string to the inverter in a second direction, where the second direction is opposite to the first direction; and determining the direct-current bus voltage at a time instant when the current reverses, as the open-circuit voltage, by the combiner box.

In an embodiment, the stepping down the direct-current bus voltage by the inverter includes: acquiring a second preset step size; and stepping down the direct-current bus voltage stepwise at the second preset step size.

In an embodiment, the determining the initial scanning voltage based on the open-circuit voltage includes: acquiring m open-circuit voltages corresponding to the m photovoltaic strings; and comparing the m open-circuit voltages to determine a maximum open-circuit voltage among the m open-circuit voltages, where the initial scanning voltage is greater than or equal to the maximum open-circuit voltage.

In an embodiment, the method further includes: short-circuiting the direct-current side of the inverter by the inverter and/or the combiner box when the output voltage of the photovoltaic string reaches the preset minimum voltage; acquiring a short-circuit current flowing through the photovoltaic string after the direct-current side is short-circuited and sending the short-circuit current to the preset controller, by the combiner box; and adding the short-circuit current to the sample set of the photovoltaic string, by the preset controller.

In an embodiment, the method further includes: performing data fitting based on the sample set of the photovoltaic string to determine an I-V characteristic curve of the photovoltaic string after the determining the sample set of the photovoltaic string. The I-V characteristic curve starts from the open-circuit voltage of the photovoltaic string.

In an embodiment, the preset controller is a controller for the combiner box, a controller for the inverter, or other controller in the photovoltaic system.

In a second aspect, an I-V curve scanning device for a photovoltaic system is further provided according to an embodiment of the present disclosure. The I-V curve scanning device includes a combiner box, an inverter, and a preset controller. The combiner box is configured to connect to m photovoltaic strings, m is a positive integer greater than 1. The combiner box is configured to, for each of the m photovoltaic strings, acquire an open-circuit voltage of the photovoltaic string and send the open-circuit voltage to the preset controller. The inverter is configured to, for each of the m photovoltaic strings, determine an initial scanning voltage based on the open-circuit voltage and regulate an output voltage of the photovoltaic string to change from the initial scanning voltage to a preset minimum voltage at a first preset step size. The combiner box is further configured to, for each of the m photovoltaic strings, acquire output currents of the photovoltaic string corresponding to the output voltages and send the output voltages and the output currents to the preset controller. The preset controller is configured to determine, for each of m photovoltaic strings, a sample set of the photovoltaic string based on the open-circuit voltage, the output voltages and the output currents of the photovoltaic string.

In a third aspect, a combiner box is further provided according to an embodiment of the present disclosure. An input side of the combiner box is configured to connect m photovoltaic strings. An output side of the combiner box is configured to connect a direct-current side of an inverter. The combiner box includes a controller, a current sampling unit, and a voltage sampling unit. The voltage sampling unit is configured to, for each of m photovoltaic strings, acquire an open-circuit voltage of the photovoltaic string and acquire an output voltage of the photovoltaic string during I-V curve scanning. The current sampling unit is configured to acquire, for each of m photovoltaic strings, an output current of the photovoltaic string. The controller is configured to determine, for each of m the photovoltaic strings, a sample set of the photovoltaic string based on the open-circuit voltage, the output voltage, and the output current of the photovoltaic string.

In a fourth aspect, a photovoltaic system is further provided according to an embodiment of the present disclosure. The photovoltaic system includes the I-V curve scanning device described above.

The photovoltaic system, the I-V curve scanning device for the photovoltaic system, and the combiner box according to the embodiments of the present disclosure perform the I-V curve scanning method. In the I-V curve scanning method, the combiner box acquires the open-circuit voltage of the photovoltaic string, and sends the open-circuit voltage to the preset controller. The inverter performs the MPPT, determines the initial scanning voltage based on the open-circuit voltage, and regulates the output voltage of the photovoltaic string to change from the initial scanning voltage to the preset minimum voltage at the first preset step size. The combiner box acquires output currents of the photovoltaic string corresponding to the output voltages, and sends the output voltages and the output currents to the preset controller. The preset controller determines the sample set of the photovoltaic string based on the open-circuit voltage, the output voltages, and the output currents of the photovoltaic string. In this way, the I-V curve scanning can be performed for a single photovoltaic string in a centralized grid-connected system. The combiner box measures the open-circuit voltage of the single photovoltaic string, as a point on the I-V characteristic curve. Therefore, the I-V characteristic curve is optimized and the scanning precision is increased, and the accuracy of performance evaluation of the photovoltaic panel is increased, thereby facilitating an increase in power production of the photovoltaic system.

### BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below show some embodiments of the present disclosure, and those skilled in the art may obtain other drawings according to the provided drawings without any creative effort.
Figure 1 is a flowchart illustrating an I-V curve scanning method for a photovoltaic system according to a first embodiment of the present disclosure;
Figure 2 is a flowchart illustrating the I-V curve scanning method for the photovoltaic system according to the first embodiment of the present disclosure in more detail;
Figure 3 is a flowchart illustrating the I-V curve scanning method for the photovoltaic system according to the first embodiment of the present disclosure in more detail;
Figure 4 is a flowchart illustrating the I-V curve scanning method for the photovoltaic system according to the first embodiment of the present disclosure in more detail;
Figure 5 is a schematic diagram illustrating an I-V characteristic curve according to the first embodiment of the present disclosure;
Figure 6 is a schematic structural diagram illustrating an I-V curve scanning device for the photovoltaic system according to a second embodiment of the present disclosure;
Figure 7 is a schematic structural diagram illustrating a combiner box according to a third embodiment of the present disclosure; and
Figure 8 is a schematic structural diagram illustrating the photovoltaic system according to a fourth embodiment of the present disclosure.

### DETAILED DESCRIPTION OF EMBODIMENTS

Hereinafter, the present disclosure is further described in detail by embodiments with reference to the drawings. It should be understood that the embodiments described herein are only for explaining the present disclosure, rather than limiting the present disclosure. In addition, it should be noted that only some structures related to the present disclosure rather than all o structures are shown in the drawings, for ease of description.

### First Embodiment

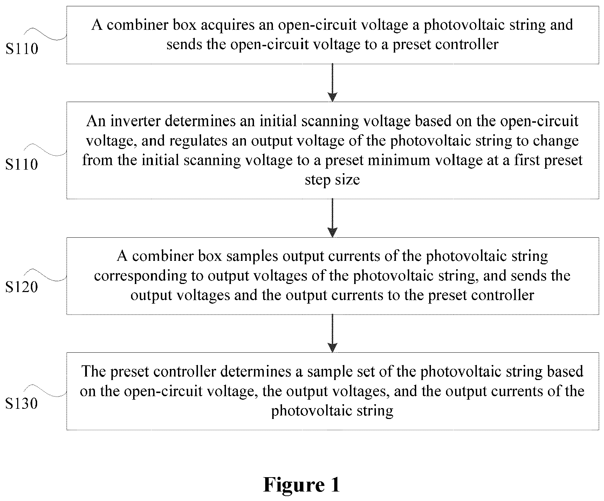

Figure 1 is a flowchart illustrating an I-V curve scanning method for a photovoltaic system according to a first embodiment of the present disclosure. The I-V curve scanning method is applicable to a centralized photovoltaic system, and the centralized photovoltaic system may be connected to a power grid. The I-V curve scanning method is performed by an I-V curve scanning device. Alternatively, the I-V curve scanning method is performed by an inverter in cooperation with a combiner box.

In the embodiments, the photovoltaic system includes an inverter and n combiner boxes. The n combiner boxes are connected to a direct-current side of the inverter. Each of the combiner boxes is connected to m photovoltaic strings, m is a positive integer greater than 1.

As illustrated in Figure 1, the I-V curve scanning method includes the following steps S1 to S4.

In step S1, for each of photovoltaic strings, the combiner box acquires an open-circuit voltage of the photovoltaic string and sends the acquired open-circuit voltages to a preset controller.

The combiner box may be a distributed combiner box and is provided with n MPPT controllers. The m photovoltaic strings track respective maximum power points under control of the MPPT controllers, to output direct currents. The direct currents are combined through DC-to-DC conversion and then are outputted.

The open-circuit voltage refers to a maximum open-circuit voltage of a single photovoltaic string. Different from a maximum open-circuit voltage of the photovoltaic system, the maximum open-circuit voltage of a single photovoltaic string characterizes power generation capacity of the single photovoltaic module. For each photovoltaic string, the open-circuit voltage is sampled by the combiner box in cooperation with the inverter.

In step S2, the inverter determines an initial scanning voltage based on the open-circuit voltage, and regulates an output voltage of the photovoltaic string to change from the initial scanning voltage to a preset minimum voltage at a first preset step size.

An operating voltage of the inverter is the voltage by the photovoltaic string.

The inverter performs I-V curve scanning and global maximum power point tracking (MPPT). The operating voltage of the inverter stepwise decreases from the initial scanning voltage to the preset minimum voltage at the first preset step size. The preset minimum voltage is a minimum voltage for the maximum power point (MPP), for example.

For example, the first preset step is set to 1V. That is, the operating voltage of the inverter decreases by 1V at preset intervals, until the voltage outputted by the photovoltaic string is less than or equal to the preset minimum voltage.

In step S3, the combiner box samples output currents of the photovoltaic string corresponding to output voltages of the photovoltaic string, and sends the output voltages and the output currents to the preset controller.

The combiner box is provided with m current sampling units. The m current sampling units and the m photovoltaic strings are in one-to-one correspondence. The current sampling units each sample the output current of the corresponding photovoltaic string at the output voltages of the photovoltaic string. Therefore, for each of the m photovoltaic strings, multiple output voltages and multiple corresponding output currents are acquired by the combiner box.

In step S4, the preset controller determines a sample set of the photovoltaic string based on the open-circuit voltage, the output voltages, and the output currents of the photovoltaic string.

An I-V characteristic curve of the photovoltaic string is drawn based on the sample set. In the sample set of the photovoltaic string, a maximum among the output voltages is the open-circuit voltage of the photovoltaic string.

The preset controller is a controller for the combiner box, a controller for the inverter, or other controller in the photovoltaic system.

In some embodiments, the preset controller is connected to an upper computer system for the photovoltaic system. The preset controller is configured to receive a scanning command transmitted by the upper computer system and send the sample set or the finally generated I-V characteristic curve to the upper computer system, for monitoring photovoltaic modules online.

The inverter, on receiving the scanning command, performs the global maximum power point tracking (MPPT), and regulates the output voltage of the photovoltaic string to decrease from the initial scanning voltage at the first preset step size. The combiner box samples the output current Ii of the photovoltaic string corresponding to the output voltage Ui, and records the sampled voltage and current as (Ui, Ii). The inverter determines whether the output voltage is less than or equal to the preset minimum voltage in real time. When the output voltage is less than or equal to the preset minimum voltage, the inverter ends the global MPPT and switches to an operating mode. As the inverter ends the global MPPT, the combiner box sends all the sampled voltages and currents (Ui, Ii) and the open-circuit voltage U0 of the photovoltaic string to the preset controller. The preset controller generates the sample set based on the open-circuit voltage U0. Therefore, I-V curve scanning for a single photovoltaic string in a centralized grid-connected system can be performed. The combiner box measures the open-circuit voltage of the single photovoltaic string, as a point on the I-V characteristic curve. Therefore, the I-V characteristic curve is optimized and the scanning precision is increased, and the accuracy of performance evaluation of the photovoltaic panel is increased, thereby facilitating an increase in power production of the photovoltaic system.

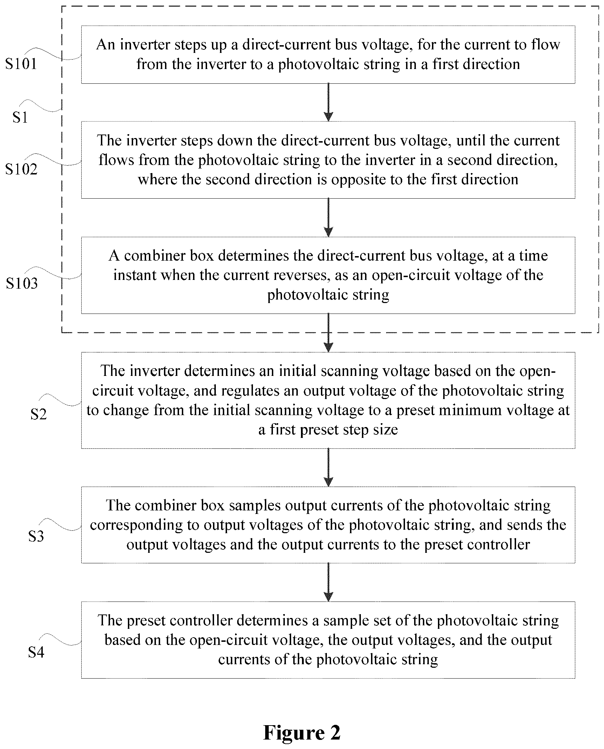

Figure 2 is a flowchart illustrating the I-V curve scanning method according to the first embodiment of the present disclosure in more detail. The acquisition of the open-circuit voltage is illustrated in more detail based on the embodiment as shown in Figure 1. However, the method is not limited thereto.

Referring to Figure 2, the acquisition of the open-circuit voltage in step S1 includes the following steps S101 to S103.

In step S101, the inverter steps up a direct-current bus voltage, for the current to flow from the inverter to the photovoltaic string in a first direction.

In some embodiments, the inverter steps up the direct-current bus voltage to a maximum operating voltage (for example, 1500V) in one step. By applying the maximum operating voltage, the currents outputted by all photovoltaic strings flow in the first direction.

In step S102, the inverter steps down the direct-current bus voltage, until the current flows from the photovoltaic string to the inverter in a second direction. The second direction is opposite to the first direction.

The photovoltaic strings are different in performance, and therefore are different in open-circuit voltage. The inverter stepwise decreases the direct-current bus voltage. Therefore, currents flowing through branches where respective photovoltaic strings are arranged are reversed separately.

In some embodiments, the inverter steps down the direct-current bus voltage by: acquiring a second preset step size, where the second preset step size includes a preset decrement by which the direct-current bus voltage decreases in one step; and stepping down the direct-current bus voltage stepwise at the second preset step size, until the current flows oppositely.

In some embodiments, the preset decrement is set to be less than 0.1V. The inverter steps down the direct-current bus voltage by the preset decrement at preset intervals, until respective currents through all the branches flow oppositely.

In step S103, the combiner box determines a direct-current bus voltage at a time instant when the current reverses as the open-circuit voltage of the photovoltaic string.

The combiner box acquires the direct-current bus voltage by combining all the photovoltaic strings. The open-circuit voltage is determined before the inverter performs the I-V curve scanning. The inverter increases the direct-current bus voltage to the maximum operating voltage. The output currents of all the photovoltaic strings sampled by the combiner box flow in the first direction (e.g., backwards). The inverter steps down the direct-current bus voltage stepwise at the second preset step size, and simultaneously the combiner box samples the output currents of all the photovoltaic strings. When a current through a photovoltaic string revers, that is, changes from flowing in the first direction to flowing in the second direction (e.g., forwards), i.e., from flowing forwards to flowing backwards, the combiner box determines the direct-current bus voltage currently as the open-circuit voltage of the photovoltaic string.

It should be noted that the smaller the second preset step size is, the higher the accuracy of the open-circuit voltage is.

Therefore, in the embodiments of the present disclosure, the inverter, in cooperation with the combiner box, measures the open-circuit voltages of the photovoltaic strings separately by reversing the current, as the points on their respective I-V characteristic curves. Therefore, the I-V characteristic curve is optimized and the scanning precision is increased, and the accuracy of performance evaluation of the photovoltaic panel is increased, thereby facilitating an increase in power production of the photovoltaic system.

In some embodiments, the inverter determines the initial scanning voltage based on the open-circuit voltages by: acquiring m open-circuit voltages corresponding to the m photovoltaic strings; comparing the m open-circuit voltages to determine a maximum open-circuit voltage among the m open-circuit voltages. The initial scanning voltage is greater than or equal to the maximum open-circuit voltage.

Respective open-circuit voltages of all the photovoltaic strings are measured, that is, the m open-circuit voltages are obtained. The maximum open-circuit voltage among the m open-circuit voltages is determined through comparison. The inverter sets the initial scanning voltage greater than or equal to the maximum open-circuit voltage. During the I-V curve scanning, the operating voltage of the inverter decrease stepwise, so that I-V data of all the photovoltaic strings at their respective open-circuit voltage points can be obtained. Therefore, the inverter can fully sweep the I-V characteristic curve for each of the photovoltaic strings.

In some embodiments, the inverter determines the maximum operating voltage as the initial scanning voltage, which is not limited herein.

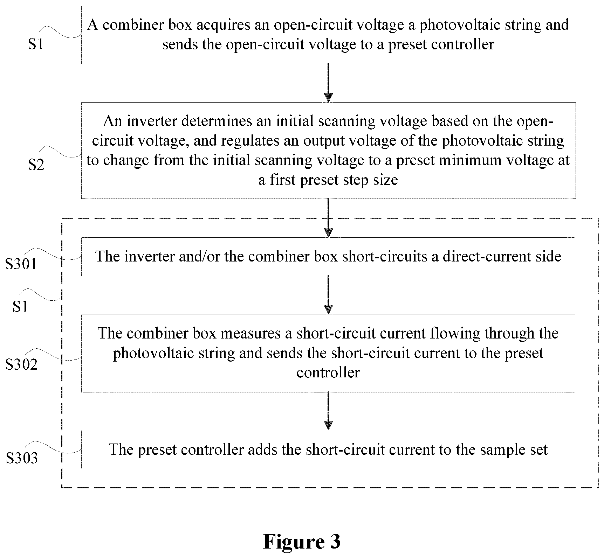

Figure 3 is a flowchart illustrating the I-V curve scanning method for the photovoltaic system according to the first embodiment of the present disclosure in more detail. Based on Figure 1, the acquisition of sample points since the output voltage of the photovoltaic string reaches the preset minimum voltage is illustrated.

As illustrated in Figure 3, since the output voltage reaches the preset minimum voltage, the method further includes the following steps S301 to S303.

In step S301, the direct-current side is short-circuited by the inverter and/or the combiner box.

In step S302, the combiner box measures a short-circuit current flowing through the photovoltaic string and sends the measured short-circuit current to the preset controller.

In step S303, the preset controller adds the short-circuit current to the sample set.

When the output voltage of the photovoltaic string is less than the preset minimum voltage (for example, the maximum for the MPPT), the inverter switches on all switches or the combiner box short circuits its output side, so that the direct-current side of the inverter is short-circuited. The combiner box measures the short-circuit current of the photovoltaic string. The preset controller records the short-circuit current and a short-circuit voltage (e.g., 0) corresponding to the short-circuit current, to update the sample set.

It should be noted that a large margin for heat dissipation and current withstanding is essential to this short circuit, to protect components against damages resulted from overcurrent.

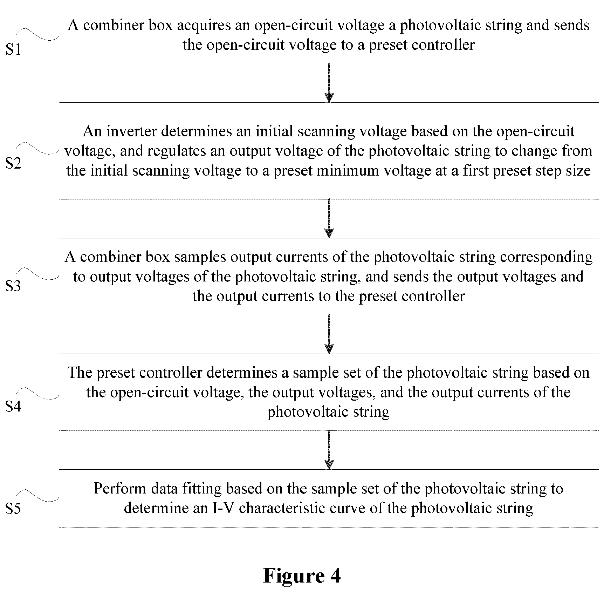

Figure 4 is a flowchart illustrating the I-V curve scanning method according to the first embodiment of the present disclosure in more detail. Referring to Figure 4, the method further includes the following step S5 after the sample set of the photovoltaic string is acquired.

In step S5, data fitting is performed based on the sample set of the photovoltaic string to determine an I-V characteristic curve of the photovoltaic string. The I-V characteristic curve of the photovoltaic string starts from the open-circuit voltage of the photovoltaic string.

Before the output voltage of the photovoltaic string is less than the preset minimum voltage, all voltage-current data (Ui, Ii) with the output voltage ranging from the open-circuit voltage point to the minimum voltage point for the MPPT (inclusive) recorded by the preset controller is determined as sample points of the photovoltaic string, and a first segment of the I-V characteristic curve is drawn. A second segment of the I-V characteristic curve is drawn by fitting with all the voltage-current data (Ui, Ii) serving as original data in combination with a preset fitting function due to failure to sample the output voltage and the output current of the photovoltaic string since the output voltage of the photovoltaic string is less than the preset minimum voltage. The I-V characteristic curve of the photovoltaic string includes the first segment and the second segment. Therefore, the I-V curve scanning can be performed over the full range of voltage, so that characteristic curve is optimized.

In some embodiments, when fitting is performed to draw the second segment of the I-V characteristic curve of the photovoltaic string, the short-circuit current and the short-circuit voltage (for example, 0) measured by short circuiting the direct-current bus are substituted into the fitting function to modify the drawn curve. Therefore, the I-V characteristic curve can be optimized and the scanning accuracy can be improved.

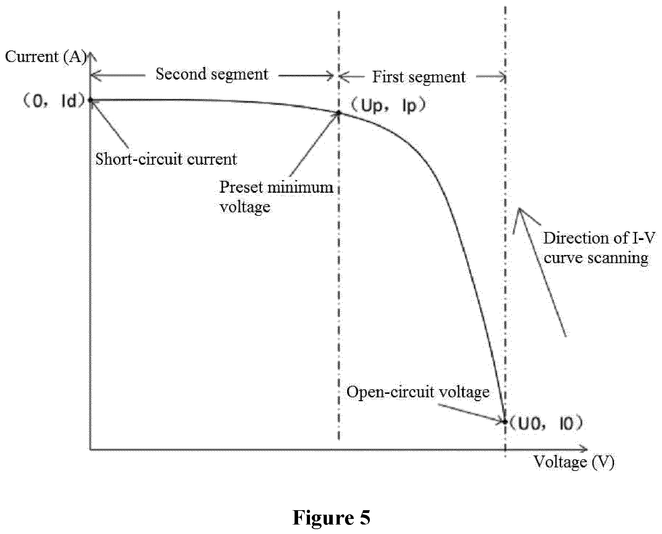

Figure 5 is a schematic diagram illustrating an I-V characteristic curve scanning curve according to the first embodiment of the present disclosure.

As illustrated in Figure 5, a first sample point (U0, 10) is determined based on the open-circuit voltage. A second sample point (Up, Ip) is determined based on the preset minimum voltage. A third sample point (0, Id) is determined based on the short-circuit current. The first segment of the I-V characteristic curve scanning starts from the first sample point (U0, 10), and ends at the second sample point (Up, Ip). The second segment of the I-V characteristic curve starts from the second sample point (Up, Ip), and ends at the third sample point (0, Id).

### Second Embodiment

An I-V curve scanning device for a photovoltaic system is provided according to the second embodiment of the present disclosure. The I-V curve scanning device according to the embodiments of the present disclosure is configured to perform the I-V curve scanning method according to the embodiments of the present disclosure, and therefore has the same beneficial effects as the method.

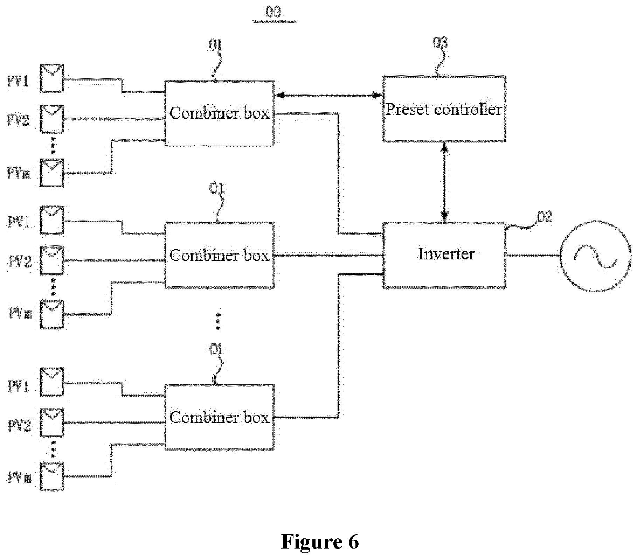

Figure 6 is a schematic structural diagram of an I-V curve scanning device for a photovoltaic system according to the second embodiment of the present disclosure.

The I-V curve scanning device 00 includes a combiner box 01, an inverter 02 and a preset controller 03. The combiner box 01 is connected to m photovoltaic strings. The m photovoltaic strings PV include a first photovoltaic string PV1, a second photovoltaic string PV2, ..., and an m-th photovoltaic string PVm. m is a positive integer greater than 1. The combiner box 01 is configured to an open-circuit voltage of the photovoltaic string and send the open-circuit voltage to the preset controller. The inverter 02 is configured to determine an initial scanning voltage based on the open-circuit voltage, and regulate output voltage of the photovoltaic string to change from the initial scanning voltage to a preset minimum voltage at a first preset step size. The combiner box 01 is further configured to acquire output currents of the photovoltaic string corresponding to the output voltages, and send the output voltages and the output currents to the preset controller. The preset controller 03 is configured to determine a sample set of the photovoltaic string based on the open-circuit voltage, the output voltages, and the output currents of the photovoltaic string.

In some embodiments, the preset controller is integrated with a controller for the combiner box or a controller for the inverter. Alternatively, the preset controller is other controller in the photovoltaic system.

In some embodiments, the inverter 02 is further configured to: step up a direct-current bus, so that a current flows from the inverter to the photovoltaic string in a first direction; and step down the direct-current bus voltage until the current flows from the photovoltaic string to the inverter in a second direction. The second direction is opposite to the first direction. The combiner box 01 is further configured to determine the direct-current bus voltage at which the current reverses its direction, as the open-circuit voltage of the photovoltaic string.

In some embodiments, the inverter 02 steps up the direct-current bus voltage by: acquiring a second preset step size; and stepping down the direct-current bus voltage stepwise at the second preset step size.

In some embodiments, the inverter determines the initial scanning voltage based on the open-circuit voltages by: acquiring m open-circuit voltages corresponding to the m photovoltaic strings; comparing the m open-circuit voltages to determine a maximum open-circuit voltage among the m open-circuit voltages. The initial scanning voltage is greater than or equal to the maximum open-circuit voltage.

In some embodiment, the direct-current side is short-circuited by the inverter and/or the combiner box when the output voltage reaches the preset minimum voltage. The combiner box measures a short-circuit current flowing through the photovoltaic string and sends the measured short-circuit current to the preset controller.

In some embodiments, the preset controller is further configured to perform data fitting based on the sample set of the photovoltaic string to determine an I-V characteristic curve of the photovoltaic string. The I-V characteristic curve of the photovoltaic string starts from the open-circuit voltage of the photovoltaic string.

In summary, the I-V curve scanning device according to the embodiments of the present disclosure performs the I-V curve scanning method. In the I-V curve scanning method, the combiner box acquires the open-circuit voltage of the photovoltaic string, and sends the open-circuit voltage to the preset controller. The inverter performs the MPPT, determines the initial scanning voltage based on the open-circuit voltage, and regulates the output voltage of the photovoltaic string to change from the initial scanning voltage to the preset minimum voltage at the first preset step size. The combiner box acquires output currents of the photovoltaic string corresponding to the output voltages, and sends the output voltages and the output currents to the preset controller. The preset controller determines the sample set of the photovoltaic string based on the open-circuit voltage, the output voltages, and the output currents of the photovoltaic string. In this way, the I-V curve scanning can be performed for a single photovoltaic string in a centralized grid-connected system. The combiner box measures the open-circuit voltage of the single photovoltaic string, as a point on the I-V characteristic curve. Therefore, the I-V characteristic curve is optimized and the scanning precision is increased, and the accuracy of performance evaluation of the photovoltaic panel is increased, thereby facilitating an increase in power production of the photovoltaic system.

### Third Embodiment

A combiner box is provided according to the third embodiment of the present disclosure. An input side of the combiner box is connected to m photovoltaic strings. An output side of the combiner box is connected to a direct-current side of an inverter.

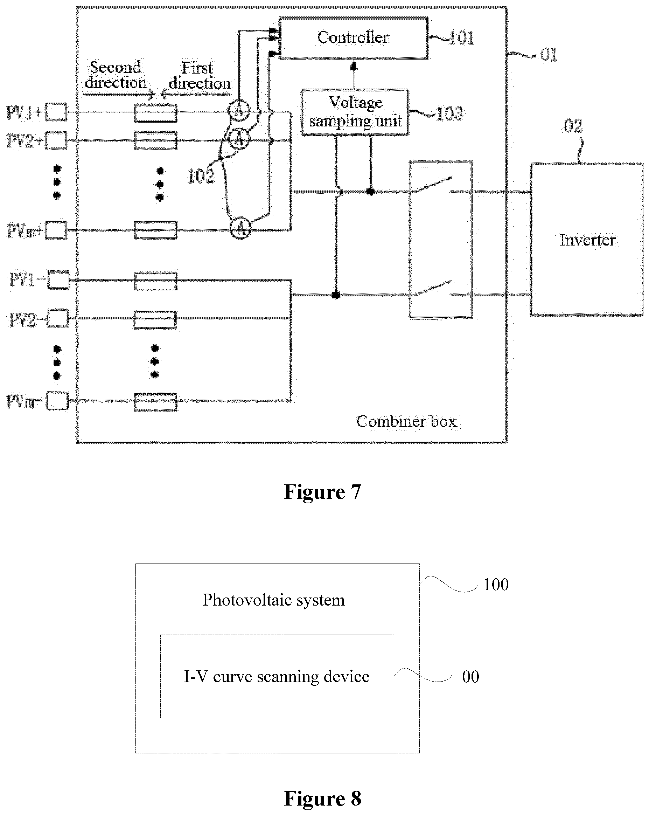

Figure 7 is a schematic structural diagram illustrating the combiner box according to the third embodiment of the present disclosure.

As illustrated in Figure 7, the combiner box 01 includes a controller 101, a current sampling unit 102 and a voltage sampling unit 103. The voltage sampling unit 103 is configured to acquire an open-circuit voltage of the photovoltaic string and acquire an output voltage of the photovoltaic string during the I-V curve scanning. The current sampling unit 102 is configured to acquire an output current of the photovoltaic string. The controller 101 is configured to determine a sample set of the photovoltaic string based on the open-circuit voltage, the output voltage, and the output current of the photovoltaic string.

In some embodiments, the combiner box is a distributed combiner box. The distributed combiner box is provided with multiple MPPT controllers. The m photovoltaic strings track respective maximum power points under control of the MPPT controllers, to output direct currents. The direct currents are combined through DC-to-DC conversion and then are outputted.

In some embodiments, the combiner box 01 is further configured to determine a direct-current bus voltage at which the current reverses its direction, as the open-circuit voltage of the photovoltaic string. The inverter 02 steps up the direct-current bus voltage so that the current flows from the inverter to the photovoltaic string in a first direction, and steps down the direct-current bus voltage until the current flows from the photovoltaic string to the inverter in a second direction. The second direction is opposite to the first direction. That is, the direction in which the current flows is reversed.

In summary, the combiner box according to the embodiments of the present disclosure is configured to measure the voltage and the current, and determine the open-circuit voltage of the single photovoltaic string by reversing the current. Therefore, the I-V characteristic curve is optimized and the scanning precision is increased, and the accuracy of performance evaluation of the photovoltaic panel is increased, thereby facilitating an increase in power production of the photovoltaic system.

### Fourth Embodiment

Figure 8 is a schematic structural diagram illustrating a photovoltaic system according to a fourth embodiment of the present disclosure. The photovoltaic system is a centralized photovoltaic power generation system in some embodiments.

As illustrated in Figure 8, the photovoltaic system 100 includes the I-V curve scanning device 00.

The photovoltaic system according to the embodiments of the present disclosure is provided with the I-V curve scanning device, for performing the I-V curve scanning method. In the I-V curve scanning method, the combiner box acquires the open-circuit voltage of the photovoltaic string, and sends the open-circuit voltage to the preset controller. The inverter performs the MPPT, determines the initial scanning voltage based on the open-circuit voltage, and regulates the output voltage of the photovoltaic string to change from the initial scanning voltage to the preset minimum voltage at the first preset step size. The combiner box acquires output currents of the photovoltaic string corresponding to the output voltages, and sends the output voltages and the output currents to the preset controller. The preset controller determines the sample set of the photovoltaic string based on the open-circuit voltage, the output voltages, and the output currents of the photovoltaic string. In this way, the I-V curve scanning can be performed for a single photovoltaic string in a centralized grid-connected system. The combiner box measures the open-circuit voltage of the single photovoltaic string, as a point on the I-V characteristic curve. Therefore, the I-V characteristic curve is optimized and the scanning precision is increased, and the accuracy of performance evaluation of the photovoltaic panel is increased, thereby facilitating an increase in power production of the photovoltaic system.

It should be noted that the above descriptions show only preferred embodiments and technical principles of the present disclosure. Those skilled in the art should understand that the present disclosure is not limited to the embodiments described above. Those skilled in the art may make various variations, modifications, and substitutions without departing from the protection scope of the present disclosure. Therefore, although the present disclosure is described in detail through the above embodiments, the present disclosure is not limited to the above embodiments. The present disclosure may further include more other equivalent embodiments without departing from the concept of the present disclosure, and the present disclosure should fall within the scope of the claims.

## Claims

1. An I-V curve scanning method for a photovoltaic system, wherein the photovoltaic system comprises an inverter and a combiner box, the combiner box is connected to a direct-current side of the inverter, the combiner box is connected to m photovoltaic strings, m is a positive integer greater than 1, and the method comprises: for each of the m photovoltaic strings,
acquiring an open-circuit voltage of the photovoltaic string and sending the open-circuit voltage to a preset controller, by the combiner box;
determining an initial scanning voltage based on the open-circuit voltage and regulating an output voltage of the photovoltaic string to change from the initial scanning voltage to a preset minimum voltage at a first preset step size, by the inverter;
acquiring output currents of the photovoltaic string corresponding to the output voltages and sending the output voltages and the output currents to the preset controller, by the combiner box; and
determining a sample set of the photovoltaic string based on the open-circuit voltage, the output voltages and the output currents of the photovoltaic string, by the preset controller.

2. The I-V curve scanning method according to claim 1, wherein the acquiring the open-circuit voltage of the photovoltaic string comprises:
stepping up a direct-current bus voltage by the inverter, wherein a current flows from the inverter to the photovoltaic string in a first direction;
stepping down the direct-current bus voltage by the inverter, until the current flows from the photovoltaic string to the inverter in a second direction, wherein the second direction is opposite to the first direction; and
determining the direct-current bus voltage, at a time instant when the current reverses, as the open-circuit voltage, by the combiner box.

3. The I-V curve scanning method according to claim 2, wherein the stepping down the direct-current bus voltage by the inverter comprises:
acquiring a second preset step size; and
stepping down the direct-current bus voltage stepwise at the second preset step size.

4. The I-V curve scanning method according to claim 1, wherein the determining the initial scanning voltage based on the open-circuit voltage comprises:
acquiring m open-circuit voltages corresponding to the m photovoltaic strings; and
comparing the m open-circuit voltages to determine a maximum open-circuit voltage among the m open-circuit voltages, wherein the initial scanning voltage is greater than or equal to the maximum open-circuit voltage.

5. The I-V curve scanning method according to claim 1, further comprising:
short-circuiting the direct-current side of the inverter by the inverter and/or the combiner box when the output voltage of the photovoltaic string reaches the preset minimum voltage;
acquiring a short-circuit current flowing through the photovoltaic string after the direct-current side is short-circuited and sending the short-circuit current to the preset controller, by the combiner box; and
adding the short-circuit current to the sample set of the photovoltaic string, by the preset controller.

6. The I-V curve scanning method according to claim 1, further comprising:
performing data fitting based on the sample set of the photovoltaic string to determine an I-V characteristic curve of the photovoltaic string after the determining the sample set of the photovoltaic string, wherein the I-V characteristic curve starts from the open-circuit voltage of the photovoltaic string.

7. The I-V curve scanning method according to claim 1, wherein the preset controller is a controller for the combiner box, a controller for the inverter, or other controller in the photovoltaic system.

8. An I-V curve scanning device for a photovoltaic system, comprising:
a combiner box;
an inverter; and
a preset controller, wherein
the combiner box is configured to connect to m photovoltaic strings, wherein m is a positive integer greater than 1;
the combiner box is configured to, for each of the m photovoltaic strings, acquire an open-circuit voltage of the photovoltaic string and send the open-circuit voltage to the preset controller;
the inverter is configured to, for each of the m photovoltaic strings, determine an initial scanning voltage based on the open-circuit voltage and regulate an output voltage of the photovoltaic string to change from the initial scanning voltage to a preset minimum voltage at a first preset step size;
the combiner box is further configured to, for each of the m photovoltaic strings, acquire output currents of the photovoltaic string corresponding to the output voltages and send the output voltages and the output currents to the preset controller; and
the preset controller is configured to determine, for each of m photovoltaic strings, a sample set of the photovoltaic string based on the open-circuit voltage, the output voltages and the output currents of the photovoltaic string.

9. A combiner box, wherein an input side of the combiner box is configured to connect m photovoltaic strings, and an output side of the combiner box is configured to connect a direct-current side of an inverter, and the combiner box comprises:
a voltage sampling unit configured to, for each of m photovoltaic strings, acquire an open-circuit voltage of the photovoltaic string, and acquire an output voltage of the photovoltaic string during I-V curve scanning;
a current sampling unit configured to acquire, for each of m photovoltaic strings, an output current of the photovoltaic string; and
a controller configured to determine, for each of m the photovoltaic strings, a sample set of the photovoltaic string based on the open-circuit voltage, the output voltage, and the output current of the photovoltaic string.

10. A photovoltaic system, comprising:
the I-V curve scanning device according to claim 8.
